# EUROPÄISCHE PATENTSCHRIFT

(11) **EP 0 589 269 B1**
(45) Veröffentlichungstag und Bekanntmachung des Hinweises auf die Patenterteilung: **02.10.1996**
(21) Anmeldenummer: 93114223.6
(22) Anmeldetag: 04.09.1993
(51) Int. Cl.: F16C 1/22

(54) **Selbsteinstellbarer Drahtzug**
Self adjusting control cable
Commande par câble auto-ajustable

(30) Priorität: 23.09.1992 DE 9212795 U
(43) Veröffentlichungstag der Anmeldung: 30.03.1994
(73) Patentinhaber: VOFA-WERK XAVIER VORBRÜGGEN GmbH & Co. KG, D-40549 Düsseldorf (DE)
(72) Erfinder: Groebmeyer, Herbert, D-58091 Hagen (DE)
(74) Vertreter: Paul, Dieter-Alfred, Dipl.-Ing.

(56) Entgegenhaltungen:
- EP-A- 0 251 582
- EP-A- 0 365 242
- DE-A- 4 010 992
- DE-U- 9 012 668
- US-A- 3 744 339

## Beschreibung

Die Erfindung betrifft einen selbsteinstellbaren Drahtzug mit einem Drahtzugmantel und einer darin axial verschieblichen Drahtzuglitze, wobei der Drahtzugmantel Befestigungseinrichtungen sowie eine Selbsteinstelleinrichtung für die Selbsteinstellung der Länge des Drahtzugmantels zwischen den Befestigungseinrichtungen aufweist und die Selbsteinstelleinrichtung zwei zueinander längsverschiebliche Einstellorgane hat.

Solche Drahtzüge finden in der Technik vielfältige Anwendung. Im Automobilbau werden sie vornehmlich als Gaszüge, Fernbedienung von Haubenschlössern oder zur Betätigung von automatischen Getrieben eingesetzt. Sie bestehen im wesentlichen aus einer Drahtzuglitze und einem diese umgebenden, schlauchförmigen Drahtzugmantel. Die Drahtzuglitze ist so ausgebildet, daß sie zumindest Zugkräfte übertragen kann. Der Drahtzugmantel umgibt die Drahtzuglitze derart, daß sie sich darin axial verschieben läßt. Drahtzuglitze und Drahtzugmantel sind in der Regel biegsam ausgebildet, so daß der Drahtzug eine Kraftübertragung auch an schwierig zugänglichen Stellen möglich macht.

Die Drahtzuglitze steht an beiden Enden des Drahtzugmantels hervor. Am einen Ende ist sie gewöhnlich mit einem Betätigungsorgan, beispielsweise einem Gaspedal, verbunden. Das andere Ende ist mit einem zu betätigendem Organ, beispielsweise einer Drosselklappe, gekoppelt. Durch Zug- oder Schiebebewegung des Betätigungsorgans kann das zu betätigende Organ fernbedient werden.

Der Drahtzugmantel ist an seinen beiden Enden ortsfest - beispielsweise an der Karosserie eines Automobils - gehalten, und zwar meist mittels Manschetten aus elastomerem Material. Um die Bewegungsbereiche des Betätigungsorgans und des zu betätigenden Organs derart aneinander anzupassen, daß eine volle Ausnutzung des Bewegungsbereichs des Betätigungsorgans auch zu einer entsprechend vollständigen Ausnutzung des Bewegungsbereichs des zu betätigenden Organs führt, weist der Drahtzugmantel an einem seiner Enden - meist dem zu betätigenden Organ benachbart - auch eine Einstelleinrichtung auf, welche aus zwei zueinander längsverschieblichen Einstellorganen besteht. Das eine Einstellorgan ist als Einstelltülle ausgebildet und mit dem Drahtzugmantel verbunden. Das andere Einstellorgan ist als eine die Einstelltülle mit Reibschluß umgebende Einstellmanschette aus elastomerem Material ausgebildet und ortsfest gehalten. Durch Verschiebung der Einstelltülle in der Einstellmanschette kann die Länge des Betätigungsmantels zwischen den Befestigungseinrichtungen eingestellt und mittels eines eingesteckten Klipps blockiert werden.

Um die Einstellarbeit zu vereinfachen, sind diese Einstelleinrichtungen inzwischen selbsteinstellend ausgebildet worden. Solche selbsteinstellbaren Drahtzüge sind beispielsweise in der EP-A-0̸ 251 582, DE-U-88 0̸1 20̸6.9 und DE-U-88 12 564.5 im einzelnen beschrieben. Die Selbsteinstellung geschieht dadurch, daß zunächst die Einstelleinrichtung so eingestellt wird, daß die Länge des Drahtzugmantels zwischen den Befestigungseinrichtungen am größten ist. Nach dem Einbau wird das Betätigungsorgan bis zur maximalen Stellung bewegt. Im letzten Teil des Bewegungsbereichs fährt dann das zu betätigende Organ gegen einen Anschlag oder mit einer Verdickung gegen die Einstelltülle. Auf diese Weise entsteht im Drahtzugmantel eine Druckkraft, die die Einstelltülle durch die Einstellmanschette schiebt, so daß sich die Länge des Drahtzugmantels zwischen den Befestigungseinrichtungen entsprechend verkürzt. Auf diese Weise wird erreicht, daß sich das zu betätigende Organ bei Erreichen der Maximalstellung des Betätigungsorgans ebenfalls in der Maximalstellung befindet.

Die dann erreichte Stellung der Selbsteinstelleinrichtung kann dann durch einen Klipp fixiert werden.

Bei den bekannten selbsteinstellbaren Drahtzügen befindet sich die Selbsteinstelleinrichtung an dem Ende des Drahtzuges, das mit dem zu betätigenden Organ verbunden ist, und bildet mit der Einstellmanschette eine der Befestigungseinrichtungen. In manchen Fällen ist jedoch die Verlegung des aus einem Stück bestehenden Drahtzuges aus räumlichen Gründen nur mit Schwierigkeiten möglich. Dieses Problem wird bei bekannten Drahtzügen ohne Selbsteinstelleinrichtung durch Aufteilung des Drahtzuges in zwei oder mehr Drahtzugabschnitte und durch Verbindung der Drahtzugabschnitte mit einer Drahtzugkupplung gelöst (vgl. DE-U-90̸ 12 668.8). Es existieren jedoch keine Vorschläge, wie dieses Problem bei einem selbsteinstellbaren Drahtzug gelöst werden kann.

Der Erfindung liegt deshalb die Aufgabe zugrunde, einen selbsteinstellbaren Drahtzug der eingangs genannten Art so auszubilden, daß er auch bei ungünstigen räumlichen Verhältnissen einfach eingebaut werden kann.

Diese Aufgabe wird erfindungsgemäß durch folgende Merkmale gelöst:
a) der Drahtzug ist in einen ersten Drahtzugabschnitt mit einem ersten Drahtzugmantelabschnitt und einem ersten Drahtzuglitzenabschnitt sowie in einen zweiten Drahtzugabschnitt mit einem zweiten Drahtzugmantelabschnitt und einem zweiten Drahtzuglitzenabschnitt aufgeteilt;
b) die Drahtzugabschnitte sind jeweils über eine Drahtzugkupplung lösbar miteinander verbunden;
c) die Drahtzugkupplung weist ein Kupplungsgehäuse mit Litzenöffnungen für die ersten und zweiten Drahtzugabschnitte auf;
d) in dem Kupplungsgehäuse sind die benachbarten Enden des ersten und zweiten Drahtzuglitzenabschnitts über ein dort verschiebliches Kupplungsorgan lösbar miteinander gekuppelt;
e) das Kupplungsgehäuse weist eine Montageöffnung für das Lösen und Kuppeln der Drahtzuglitzenabschnitte auf;
f) das den zweiten Drahtzugmantelabchnitt benachbarte Ende des ersten Drahtzugmantelabschnitts weist die Selbsteinstellrichtung auf;
g) eines der Einstellorgane der Selbsteinstelleinrichtung stützt sich am Kupplungsgehäuse ab.

Nach der Erfindung wird der Drahtzug in zwei Drahtzugabschnitte aufgeteilt, wobei die Drahtzugabschnitte über eine Drahtzugkupplung lösbar miteinander verbunden sind. Dabei ist die Drahtzugkupplung mit der Selbsteinstelleinrichtung zu einem Organ kombiniert. Dem liegt die schon zur Erfindung gehörende Überlegung zugrunde, daß die Drahtzugkupplung bestimmungsgemäß an einem Ort montiert wird, welcher gut zugänglich ist. Es kann dann in einem Arbeitsgang die Kupplung der beiden Drahtzugabschnitte und die Selbsteinstellung mit anschließender Blockierung der eingestellten Stellung von einem Ort aus durchgeführt werden.

In Ausbildung der Erfindung ist vorgesehen, daß die Selbsteinstelleinrichtung aus einer mit dem ersten Drahtzugmantelabschnitt verbundenen Einstelltülle und einer diese umgebenden Einstellmanschette besteht, welche sich an dem Kupplungsgehäuse abstützt. Hierdurch ergibt sich eine besonders einfache Getaltung, wobei die Einstelltülle bei der Selbsteinstellung zwecks Verkürzung der Länge des Drahtzuges zwischen den Befestigungseinrichtungen in das Kupplungsgehäuse einfährt. Dabei kann sich der zweite Drahtzugmantelabschnitt am Kupplungsgehäuse abstützen.

In weiterer Ausgestaltung der Erfindung ist vorgesehen, daß das Kupplungsgehäuse eine die Montageöffnung verschließende Öffnungsklappe aufweist. Dabei kann vorgesehen sein, daß die Öffnungsklappe die Litzenöffnung für den ersten Drahtzuglitzenabschnitt derart teilt, daß die Selbsteinstelleinrichtung bei geöffneter Öffnungsklappe seitlich in die Litzenöffnung einlegbar ist. Dabei sollte sich die Öffnungklappe über die gesamte Länge des Kupplungsgehäuses erstrecken, um die Zugänglichkeit optimal zu gestalten.

Das sich am Kupplungsgehäuse abstützende Einstellorgan kann sowohl innerhalb des Kupplungsgehäuses untergebracht sein, sich aber auch an der Außenseite des Kupplungsgehäuses abstützen. In diesem Fall ist es zweckmäßig einen Stützsteg zum Umfassen dieses Einstellorgans vorzusehen.

Nach einem weiteren Merkmal der Erfindung ist vorgeschlagen, daß mit dem Kupplungsgehäuse ein Haltebügel verbunden ist, der mit dem sich am Kupplungsgehäuse abstützenden Einstellorgan derart in Eingriff steht, daß das Einstellorgan an dem Kupplungsgehäuse unverrückbar fixiert ist. Der Haltebügel kann Befestigungsabschnitte zur Befestigung des Kupplungsgehäuses und der Selbsteinstelleinrichtung beispielsweise an der Karosserie eines Fahrzeuges aufweisen. Hierzu sollte sich der Haltebügel über die Länge des Kupplungsgehäuses erstrecken und das Kupplungsgehäuses auf dem Haltebügel aufgeklippt sein.

Das Kupplungsorgan kann beispielsweise aus einer an einem Drahtzuglitzenabschnitt angebrachten Verdickung und einer an dem anderen Drahtzuglitzenabschnitt angebrachten Pfanne zum Formschlüssigen einhängen der Verdickung bestehen. Zweckmäßig ist es, wenn die Pfanne an dem zweiten Drahtzuglitzenabschnitt und die Verdickung an dem ersten Drahtzuglitzejnabschnitt angebracht sind.

In der Zeichnung ist die Erfindung anhand eines Ausführungsbeispiels näher veranschaulicht. Es zeigen:
- Figur 1: einen Drahtzug in teilweiser Seitenansicht;
- Figur 2: den Drahtzug gemäß Figur 1 in der Draufsicht und
- Figur 3: den Drahtzug gemäß den Figuren 1 und 2 in der Draufsicht bei geöffnetem Kupplungsgehäuse und mit Teilschnittdarstellung.

Der in den Figuren nur teilweise dargestellte Drahtzug (1) ist zweigeteilt ausgeführt und besteht demgemäß aus einem ersten Drahtzugabschnitt (2) und einem zweiten Drahtzugabschnitt (3). Der erste Drahtzugabschnitt (2) weist einen ersten Drahtzugmantelabschnitt (4) mit einem darin axial verschieblich geführten ersten Drahtzuglitzenabschnitt (5) und der zweite Drahtzugabschnitt weist einen zweiten Drahtzugmantelabschnitt (6) mit einem darin axial verschieblich geführten zweiten Drahtzuglitzenabschnitt (7) auf. Die Drahtzugmantelabschnitte (4, 6) sind schlauchförmig ausgebildet und biegsam. Die Drahtzuglitzenabschnitte (5, 7) bestehen aus einem biegsamen, zugfestem Draht.

Der erste Drahtzuglitzenabschnitt (5) ist - was hier nicht sichtbar ist - mit einem Betätigungsorgan, beispielsweise mit einem Gaspedal verbunden. Der zweite Drahtzuglitzenabschnitt (7) ist mit seinem freien Ende an einem zu betätigenden Organ angebracht, beispielsweise an der Drosselklappe eines Verbrennungsmotors. Der erste Drahtzugmantelabschnitt (4) ist - was hier ebenfalls nicht gezeigt ist - an seinem freien Ende über eine Befestigungsmanschette festgelegt, beispielsweise an der Karosserie eines Fahrzeuges. Ensprechendes gilt für den zweiten Drahtzugmantelabschnitt (6).

Die beiden Drahtzugabschnitte (2, 3) sind über eine Drahtzugkupplung (8) miteinander verbunden. Diese Drahtzugkupplung (8) hat ein Kupplungsgehäuse (9), das horizontal in einen Gehäuseboden (10̸) und einen Gehäusedeckel aufgeteilt ist. Der Gehäusedeckel (11) ist über einen geteilten Scharniersteg (12) aufklappbar an der einen Längsseite des Gehäusebodens (10̸) angelenkt. Er weist insgesamt vier Laschen (13, 14, 15, 16) auf, die im geschlossenen Zustand hinter Vorsprüngen (17, 18, 19, 20̸) fassen und biegsam ausgebildet sind.

Das Kupplungsgehäuse (9) weist linksseitig einen Hülsenabschnitt (21) auf, in den der zweite Drahtzugmantelabschnitt (6) hineinragt. Er stützt sich dort am Kupplungsgehäuse (9) ab. Der zweite Drahtzuglitzenabschnitt (7) ragt in das Kupplungsgehäuse (9) hinein und ist dort mit einer Kupplungspfanne (22) verbunden. Die Kupplungspfanne (22) ist in dem Kupplungsgehäuse (9) verschieblich und unverdrehbar geführt. Die Kupplungspfanne (22) besteht wie das Kupplungsgehäuse (9) aus Kunststoff.

Das der Drahtzugkupplung (8) benachbarte Ende des ersten Drahtzugmantelabschnitts (4) wird von einer Selbsteinstelleinrichtung (23) gebildet. Diese weist eine Einstelltülle (24) aus im wesentlichen starrem Kunststoff auf, in die das Ende des ersten Drahtzugmantelabschnitts (4) hineinragt, so daß beide fest miteinander verbunden sind. Die Einstelltülle (24) ist außenseitig gerippt ausgebildet und in diesem Bereich von einer Einstellmanschette (25) umgeben. Diese hat einen relativ festen Reibschluß zu der Einstelltülle (24).

Die Einstellmanschette (25) stützt sich an der rechtsseitigen Stirnseite (26) des Kupplungsgehäuses (9) ab. Sie ist dort von einem ringförmigen Stützsteg (27) umgeben, der an dem Kupplungsgehäuse (9) angeformt ist. Die Teilung zwischen Gehäuseboden (10̸) und Gehäusedeckel (11) des Kupplungsgehäuses (9) ist so getroffen daß die dortige Öffnung des Kupplungsgehäuses (9) geteilt wird, so daß die Selbsteinstelleinrichgung (23) dort problemlos eingelegt werden kann. Dabei ragt die Einstelltülle (24) teilweise in den Innenraum des Kupplungsgehäuses (9) hinein.

Der zweite Drahtzuglitzenabschnitt (7) durchdringt den Hülsenabschnitt Einstelltülle (21) und reicht bis zur Kupplungspfanne (22). Am freien Ende weist der erste Drahtzuglitzenabschnitt eine kugelförmige Kupplungsverdickung (28) auf, die formschlüssig in die Kupplungspfanne (22) paßt und in diese eingehängt ist. Auf diese Weise sind die beiden Drahtzuglitzenabschnitte (5, 7) zugfest und spielfrei miteinander gekuppelt. Die räumlichen Verhältnisse innerhalb des Kupplungsgehäuses (9) sind dabei so beschaffen, daß die Kupplungsverdickung (28) bei geschlossenem Gehäusedeckel (11) nicht aus der Kupplungspfanne herausspringen kann.

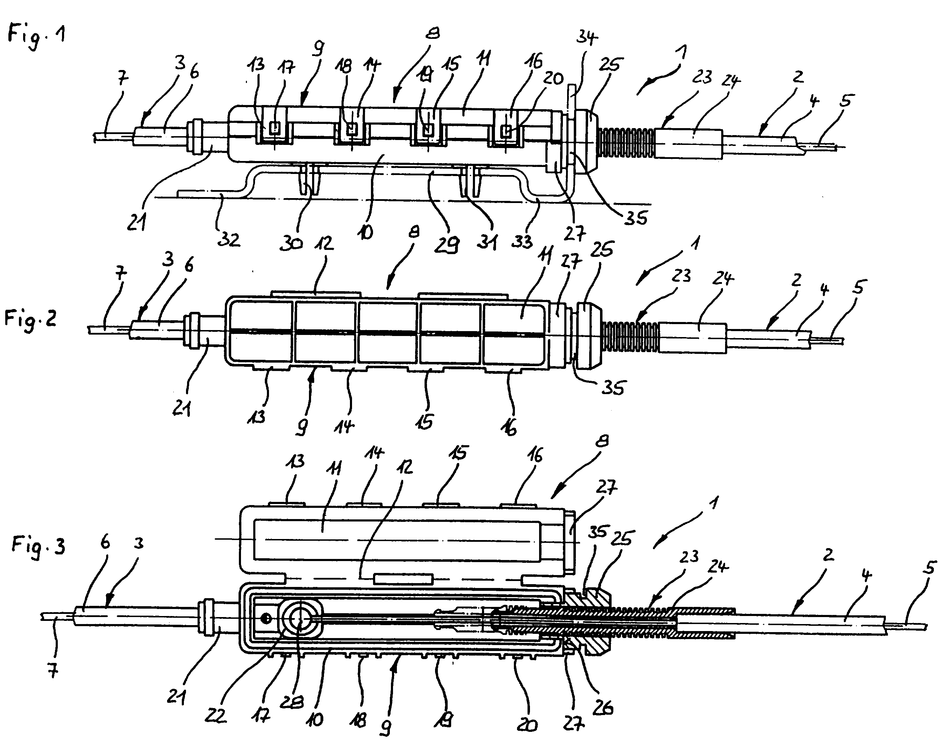

An der Unterseite des Kupplungsgehäuses (9) verläuft ein Haltebügel (29) (nur in Figur 1 eingezeichnet). In öffnungen dieses Haltebügels (29) ist der Gehäuseboden (10̸) mittels hakenartigen Doppelvorsprüngen (30̸, 31) unverlierbar eingerastet. Der Haltebügel (29) weist von der Unterseite des Gehäusebodens (10̸) weggebogene Befestigungsabschnitte (32, 33) auf, die der Anlage an einem Karosserieteil dienen und dort mittels üblichen Befestigungsmitteln angebracht sind. Der Haltebügel (29) endet rechtsseitig in einer hochgestellten Haltegabel (34), die beidseitig in eine Ringnut (35) in der Einstellmanschette (25) einfaßt und diese unverlierbar fixiert.

Die Montage des Drahtzuges (1) erfolgt in der Weise, daß zunächst unabhängig voneinander die Drahtzugkupplung (8) zusammen mit dem zweiten Drahtzugabschnitt (3) sowie der erste Drahtzugabschnitt (2) verlegt werden und das Kupplungsgehäuse (9) über den Haltebügel (29) befestigt wird. Es werden die freien Enden der Drahtzuglitzenabschnitte (5, 7) an dem Betätigungsorgan bzw. dem zu betätigendem Organ eingehängt. Dann wird die Selbsteinstelleinrichtung (23) bei geöffnetem Kupplungsgehäuse (9) in den Gehäuseboden (10̸) eingesetzt, wie dies aus Figur (3) ersichtlich ist. Der erste Drahtzuglitzenabschnitt (5) wird mit seiner Kupplungsverdickung (28) in die Kupplungspfanne (22) eingehängt. Dann wird der Gehäusedeckel (11) durch Verschwenkung um den Scharniersteg (12) geschlossen, wobei die Laschen (13, 14, 15, 16) hinter die Rastvorsprünge (17, 18, 19, 20̸) fassen.

Im Anschluß daran erfolgt der Selbsteinstellvorgang. Hierzu wid das Betätigungsorgan, beispielsweise das Gaspedal, in Richtung auf dessen maximale Stellung bewegt. Dessen Bewegung überträgt sich über die Drahtzuglitzenabschnitte (5, 7) auf das zu betätigende Organ, beispielsweise eine Drosselklappe. Kommt das zu betätigende Organ in seiner Maximalstellung an einem Anschlag zur Anlage und hat das Betätigungsorgan noch nicht seine Maximalstellung erreicht, wird das Betätigungsorgan weiterbewegt. Hierdurch entsteht in dem ersten Drahtzugmantelabschnitt (4) eine Druckkraft, die auf die Einstelltülle (24) übertragen wird. Sie ist so groß, daß sie den Reibschluß zur Einstellmanschette (25) überwindet und daß sie in das Kupplungsgehäuse (9) bis zu der strichpunktierten Stellung verschoben wird. Auf diese Weise ist die wirksame Länge des ersten Drahtzugabschnittes (2) zwischen den Befestigungspunkten entsprechend verkürzt. Die Maximalstellung des Betätigungsorgans und des zu betätigenden Organs sind dann gleichzeitig erreicht. Der Einstellvorgang ist damit abschlossen. Zur vorsorglichen Sicherung der eingestellten Stellung zwischen Einstelltülle (24) und Einstellmanschette (25) wird unmittelbar hinter der Einstellmanschette (25) ein Klipp auf die Einstelltülle (24) gesteckt, und zwar zwischen zwei Rippen.

## Patentansprüche

1. Selbsteinstellbarer Drahtzug (1) mit einem Drahtzugmantel (4, 6) und einer darin axial verschieblichen Drahtzuglitze (5, 7), wobei der Drahtzugmantel (4, 6) Befestigungseinrichtungen sowie eine Selbsteinstelleinrichtung (23) für die Selbsteinstellung der Länge des Drahtzugmantels (4, 6) zwischen zwei Befestigungseinrichtungen aufweist und die Selbsteinstelleinrichtung (23) zwei zueinander längsverschiebliche Einstellorgane (24, 25) hat,
gekennzeichnet durch folgende Merkmale:
a) der Drahtzug (1) ist in einen ersten Drahtzugabschnitt (2) mit einem ersten Drahtzugmantelabschnitt (4) und einem ersten Drahtzuglitzenabschnitt (5) sowie in einen zweiten Drahtzugabschnitt (3) mit einem zweiten Drahtzugmantelabschnitt (6) und einem zweiten Drahtzuglitzenabschnitt (7) aufgeteilt;
b) die Drahtzugabschnitte (2, 3) sind jeweils über eine Drahtzugkupplung (8) lösbar miteinander verbunden;
c) die Drahtzugkupplung (8) weist ein Kupplungsgehäuse (9) mit Litzenöffnungen für die ersten und zweiten Drahtzuglitzenabschnitte (5, 7) auf;
d) in dem Kupplungsgehäuse (9) sind die benachbarten Enden der ersten und zweiten Drahtzuglitzenabschnitte (5, 7) über ein dort verschiebliches Kupplungsorgan (22, 28) lösbar miteinander gekuppelt;
e) das Kupplungsgehäuse (9) weist eine Montageöffnung (11) für das Lösen und Kuppeln der Drahtzuglitzenabschnitte (5, 7) auf;
f) das dem zweiten Drahtzugmantelabschnitt (6) benachbarte Ende des ersten Drahtzugmantelabschnittes (4) weist die Selbsteinstelleinrichtung (23) auf;
g) eines der Einstellorgane (25) der Selbsteinstelleinrichtung (23) stützt sich am Kupplungsgehäuse (9) ab.

2. Drahtzug nach Anspruch (1)
dadurch gekennzeichnet, daß die Selbsteinstelleinrichtung (23) aus einer mit dem ersten Drahtzugmantelabschnitt (4) verbundenen Einstelltülle (24) und einer diese umgebenden Einstellmanschette (25) besteht, welche sich an dem Kupplungsgehäuse (9) abstützt.

3. Drahtzug nach Anspruch (1) oder (2),
dadurch gekennzeichnet, daß sich der zweite Drahtzugmantelabschnitt (6) an dem Kupplungsgehäuse (9) abstützt.

4. Drahtzug nach einem der Ansprüche (1) bis (3),
dadurch gekennzeichnet, daß das Kupplungsgehäuse (9) eine die Montageöffnung verschließende Öffnungsklappe (11) aufweist.

5. Drahtzug nach Anspruch 4,
dadurch gekennzeichnet, daß die Öffnungsklappe (11) die Litzenöffnung für den ersten Drahtzuglitzenabschnitt (5) derart teilt, daß die Selbsteinstelleinrichtung (23) bei geöffneter Öffnungsklappe (11) seitlich in die Litzenöffnung einlegbar ist.

6. Drahtzug nach Anspruch (4) oder (5),
dadurch gekennzeichnet, daß sich die Öffnungsklappe (11) über die gesamte Länge des Kupplungsgehäuses (9) erstreckt.

7. Drahtzug nach einem der Ansprüche (1) bis (6),
dadurch gekennzeichnet, daß sich das eine Einstellorgan (25) außenseitig an dem Kupplungsgehäuse (9) abstützt.

8. Drahtzug nach Anspruch (7),
dadurch gekennzeichnet, daß das Kupplungsgehäuse (9) eine Stützsteg (27) zum Umfassen des Einstellorgans (25) aufweist.

9. Drahtzug nach einem der Ansprüche (1) bis (8),
dadurch gekennzeichnet, daß mit dem Kupplungsgehäuse (9) ein Haltebügel (29) verbunden ist, der mit dem sich am Kupplungsgehäuse (9) abstützenden Einstellorgan (25) derart in Eingriff steht, daß das Einstellorgan (25) an dem Kupplungsgehäuse (9) unverrückbar fixiert ist.

10. Drahtzug nach Anspruch (9),
dadurch gekennzeichnet, daß der Haltebügel (29) Befestigungsabschnitte (32, 33) aufweist.

11. Drahtzug nach Anspruch (9) oder (10̸),
dadurch gekennzeichnet, daß sich der Haltebügel (29) über die Länge des Kupplungsgehäuses (9) erstreckt und das Kupplungsgehäuse (9) auf den Haltebügeln (29) aufgeklippt ist.

12. Drahtzug nach einem der Ansprüche (1) bis (11),
dadurch gekennzeichnet, daß das Kupplungsorgan aus einer an einem Drahtzuglitzenabschnitt (7) angebrachten Kupplungsverdickung (28) und einer an dem anderen Drahtzuglitzenabschnitt (5) angebrachten Kupplungspfanne (22) zum formschlüssigen Einhängen der Kupplungsverdickung (28) besteht.

13. Drahtzug nach Anspruch (12),
dadurch gekennzeichnet, daß die Kupplungspfanne (22) an dem zweiten Drahtzuglitzenabschnitt (7) und die Kupplungsverdickung (28) an dem ersten Drahtzuglitzenabschnitt (5) angebracht sind.

## Claims

1. Self-adjusting cable control (1) comprising a cable control sheath (4, 6) and a pull wire (5, 7) axially movable therein, the cable control sheath (4, 6) having fastening devices and a self-adjustment device (23) for the self-adjustment of the length of the cable control sheath (4, 6) between two fastening devices, and the self-adjustment device (23) having two adjustment elements (24, 25) longitudinally movable relative to one another,
characterized by the following features:
a) the cable control (1) is divided into a first cable control section (2) comprising a first cable-control sheath section (4) and a first-pull wire section (5), and into a second cable control section (3) comprising a second cable-control sheath section (6) and a second pull wire section (7);
b) the cable control sections (2, 3) are each detachably connected to one another by means of a -cable control coupling (8);
c) the cable control coupling (8) has a coupling casing (9) having wire openings for the first and second pull wire sections (5, 7);
d) in the coupling casing (9) the adjoining ends of the first and second pull wire sections (5, 7) are detachably coupled together by means of a coupling element (22, 28) which is slidable there;
e) the coupling casing (9) has an assembly opening (11) for detaching and coupling the pull wire sections (5, 7);
f) that end of the first cable-control sheath section (4) which adjoins the second cable-control sheath section (6) is provided with the self-adjustment device (23);
g) one of the adjustment elements (25) of the self-adjustment device (23) is supported against the coupling casing (9).

2. Cable control according to Claim (1),
characterized in that the self-adjustment device (23) consists of an adjusting sleeve (24) connected to the first cable-control sheath section (4) and of an adjusting collar (25) which surrounds said sleeve and is supported against the coupling casing (9).

3. Cable control according to Claim (1) or (2),
characterized in that the second cable-control sheath section (6) is supported against the coupling casing (9).

4. Cable control according to one of Claims (1) to (3),
characterized in that the coupling casing (9) has an opening flap (11) closing the assembly opening.

5. Cable control according to Claim 4,
characterized in that the opening flap (11) divides the wire opening for the first pull wire section (5) in such a manner that the self-adjustment device (23) can be inserted sideways into the wire opening when the opening flap (11) is open.

6. Cable control according to Claim (4) or (5),
characterized in that the opening flap (11) extends over the entire length of the coupling casing (9).

7. Cable control according to one of Claims (1) to (6),
characterized in that the one adjustment element (25) is supported on the outside against the coupling casing (9).

8. Cable control according to Claim (7),
characterized in that the coupling casing (9) has a support bead (27) to engage around the adjustment element (25).

9. Cable control according to one of Claims (1) to (8),
characterized in that a holding bow (29) is connected to the coupling casing (9) and engages with the adjustment element (25), which is supported against the coupling casing (9), in such a manner that the adjustment element (25) is immovably fixed on the coupling casing (9).

10. Cable control according to Claim (9),
characterized in that the holding bow (29) has fastening portions (32, 33).

11. Cable control according to Claim (9) or (10),
characterized in that the holding bow (29) extends over the length of the coupling casing (9) and the coupling casing (9) is clipped on the holding bows (29).

12. Cable control according to one of Claims (1) to (11),
characterized in that the coupling element consists of a coupling thickening (28) provided on a pull wire section (7) and of a coupling socket (22) provided on the other pull wire section (5) for the positive engagement of the coupling thickening (28).

13. Cable control according to Claim (12),
characterized in that the coupling socket (22) is provided on the second pull wire section (7) and the coupling thickening (28) is provided on the first pull wire section (5).

## Revendications

1. Câble Bowden autoréglable (1) avec une gaine de câble Bowden (4, 6) et un toron de câble Bowden (5, 7) axialement coulissant dans cette gaine, la gaine de câble Bowden (4, 6) présentant des dispositifs de fixation ainsi qu'un dispositif de réglage automatique (23) pour le réglage automatique de la longueur de la gaine de câble Bowden (4, 6) entre deux dispositifs de fixation, et le dispositif de réglage automatique (23) possédant deux organes de réglage (24, 25) déplaçables longitudinalement l'un par rapport à l'autre,
**caractérisé** par les caractéristiques suivantes :
a) le câble Bowden (1) est divisé en un premier tronçon (2) de câble Bowden avec un premier tronçon (4) de gaine de câble Bowden et un premier tronçon (5) de toron de câble Bowden, et un deuxième tronçon (3) de câble Bowden avec un deuxième tronçon (6) de gaine de câble Bowden et un deuxième tronçon (7) de toron de câble Bowden,
b) les tronçons (2, 3) de câble Bowden sont mutuellement assemblés de façon détachable par un accouplement de câble Bowden (8),
c) l'accouplement de câble Bowden (8) présente un boîtier d'accouplement (9) avec des ouvertures pour le premier et le deuxième tronçon (5, 7) de toron de câble Bowden,
d) les extrémités voisines du premier et du deuxième tronçon (5, 7) de toron de câble Bowden sont, dans le boîtier d'accouplement (9), mutuellement accouplées de façon détachable par un organe d'accouplement (22, 28) coulissant dans ce boîtier,
e) le boîtier d'accouplement (9) présente une ouverture de montage (11) pour détacher et accoupler les tronçons (5, 7) de toron de câble Bowden,
f) l'extrémité du premier tronçon (4) de gaine de câble Bowden qui est voisine du deuxième tronçon (6) de gaine de câble Bowden présente le dispositif de réglage automatique (23),
g) un premier organe de réglage (25) du dispositif de réglage automatique (23) s'appuie contre le boîtier d'accouplement (9).

2. Câble Bowden selon la revendication 1, **caractérisé** en ce que le dispositif de réglage automatique (23) est constitué d'une douille de réglage (24) assemblée au premier tronçon (4) de gaine de câble Bowden et d'une manchette de réglage (25), qui entoure cette douille et s'appuie contre le boîtier d'accouplement (9).

3. Câble Bowden selon la revendication 1 ou 2, **caractérisé** en ce que le deuxième tronçon (6) de gaine de câble Bowden s'appuie contre le boîtier d'accouplement (9).

4. Câble Bowden selon une des revendications 1 à 3, **caractérisé** en ce que le boîtier d'accouplement (9) présente un volet d'ouverture (11) fermant l'ouverture de montage.

5. Câble Bowden selon la revendication 4, **caractérisé** en ce que le volet d'ouverture (11) divise l'ouverture pour le premier tronçon (5) de toron de câble Bowden de telle sorte que le dispositif de réglage automatique (23) peut être inséré latéralement dans cette ouverture lorsque le volet d'ouverture (11) est ouvert.

6. Câble Bowden selon la revendication 4 ou 5, **caractérisé** en ce que le volet d'ouverture (11) s'étend sur toute la longueur du boîtier d'accouplement (9).

7. Câble Bowden selon une des revendications 1 à 6, **caractérisé** en ce que ledit premier organe de réglage (25) s'appuie extérieurement contre le boîtier d'accouplement (9).

8. Câble Bowden selon la revendication 7, **caractérisé** en ce que le boîtier d'accouplement (9) présente une nervure de soutien (27) pour embrasser l'organe de réglage (25).

9. Câble Bowden selon une des revendications 1 à 8, **caractérisé** en ce qu'un étrier de retenue (29) est assemblé au boîtier d'accouplement (9), étrier qui est en engagement avec l'organe de réglage (25) s'appuyant contre le boîtier d'accouplement (9) de telle sorte que l'organe de réglage (25) est fixé en position de manière immuable contre le boîtier d'accouplement (9).

10. Câble Bowden selon la revendication 9, **caractérisé** en ce que l'étrier de retenue (29) présente des parties de fixation (32, 33).

11. Câble Bowden selon la revendication 9 ou 10, **caractérisé** en ce que l'étrier de retenue (29) s'étend sur la longueur du boîtier d'accouplement (9), et le boîtier d'accouplement (9) est enclipsé sur l'étrier de retenue (29).

12. Câble Bowden selon une des revendications 1 à 11, **caractérisé** en ce que l'organe d'accouplement est constitué d'un épaississement d'accouplement (28) prévu sur un tronçon (7) de toron de câble Bowden et d'une cuvette d'accouplement (22) prévue sur l'autre tronçon (5) de toron de câble Bowden pour y accrocher par engagement positif l'épaississement d'accouplement (28).

13. Câble Bowden selon la revendication 12, **caractérisé** en ce que la cuvette d'accouplement (22) est prévue sur le deuxième tronçon (7) de toron de câble Bowden et l'épaississement d'accouplement (28) sur le premier tronçon (5) de toron de câble Bowden.
